# EUROPEAN PATENT APPLICATION

(11) **EP 1 306 635 A1**
(43) Date of publication of application: **02.05.2003**
(21) Application number: 02020427.7
(22) Date of filing: 11.09.2002
(51) Int. Cl.: F26B 21/08

(54) **Device for optimizing systems for dehumidifying plastic granules**

(30) Priority: 25.10.2001 IT PD20010251
(71) Applicant: Piovan S.P.A., 30036 Santa Maria Di Sala (IT)
(72) Inventor: Marzaro, Francesco, 30036 Santa Maria di Sala (Prov.Venezia) (IT)
(74) Representative: Modiano, Guido, Dr.-Ing.

(57) **Abstract**

A device for optimizing systems for dehumidifying plastic granules of the type that comprises at least one tower (11a,11b) for containing molecular sieves, at least one hopper (12) for plastic granules, ducts (13) for connecting the tower (11a,11b) and the hopper (12), at least one blower (14) which circulates air in the ducts (13), filtering means (15) and at least one air cooling unit (16), arranged upstream of the molecular sieve tower (11a,11b), and means (17) for heating the air upstream of the hopper (12). The device also comprises a regulator (23) for regulating the flow-rate of the cooling fluid of the air cooling unit.

## Description

The present invention relates to a device for optimizing systems for dehumidifying plastic granules.

As is known, dehumidification systems are meant to produce dry air that is sent into a hopper, where it passes through plastic granules, which transfer any moisture to the air.

Moreover, dehumidification systems utilize the action of molecular sieves, which are capable of absorbing the water particles that are present in the air and can be regenerated once they have become saturated.

During the functional operation of a dehumidification system of the known type, a blower circulates air, which is passed through a tower packed with molecular sieves.

Inside the tower, the air releases its moisture and is then heated and sent into the hopper, where it passes through the plastic granules.

The plastic granules transfer to the air the water particles that they contain.

The air that exits from the hopper is then filtered and cooled before returning to the blower.

The regeneration process is performed to allow the sieves saturated by previous dehumidification processes to become efficient again.

The process occurs in two steps: a heating step and a cooling step, during which the sieves cannot be used.

During the heating step, a blower, which is independent of the blower used for the working process, circulates within a corresponding circuit ambient air heated and passed through the sieves to be regenerated.

The air, after exiting from the sieves, is expelled into the environment.

The heating step ends when the sieve is fully regenerated.

During the cooling step, the blower used for the regeneration process circulates air, which after being cooled is passed through the sieves to be regenerated.

The cooling step ends when the sieve reaches a temperature that is compatible with the working process.

To prevent the system from halting its operation during the regeneration process, usually two towers containing molecular sieves are used, ensuring the continuity of the dehumidification process, since while one tower is being regenerated the other one actively participates in the process.

Once the sieves of one tower have been regenerated, they are kept isolated from the environment while waiting for the sieves of the active tower to lose their efficiency.

Systems for dehumidifying plastic granules are normally installed in combination with systems for processing the plastic material, such as presses, extruders, et cetera, and have characteristics that allow them to operate even at the maximum planned capacity.

However, since plastic processing systems rarely work at maximum capacity, the dehumidification devices, accordingly, end up working more than actually necessary.

This causes a higher than necessary energy consumption and a possible deterioration of the plastic granules caused by excessive dehumidification.

The aim of the present invention is to solve or substantially reduce the problems of known types of systems for dehumidifying plastic granules.

Within the scope of this aim, an important object is to provide a device for optimizing the dehumidification process in systems for dehumidifying plastic granules.

Another object is to provide a device that does not cause deterioration of the plastic granule.

Another object is to provide a device that is capable of striking the plastic granules with air brought to a preset temperature for a preset period.

Another object is to provide a device that has a simple structure and can also be applied to systems that are already currently commercially available.

Another object is to provide a device that has a low cost.

This aim and these and other objects that will become better apparent hereinafter are achieved by a device for optimizing systems for dehumidifying plastic granules of the types that comprise at least one tower for containing molecular sieves, at least one hopper for plastic granules, ducts for connecting said container and said hopper, at least one blower which circulates air in said ducts, filtering means and at least one air cooling unit, which are arranged upstream of said molecular sieve container, and means for heating the air upstream of said hopper, said device being characterized in that it comprises a regulator for regulating the flow-rate of the cooling fluid of said air cooling unit.

Advantageously, the device can comprise a regulator for regulating the flow-rate of the air sent into said hopper.

Further characteristics and advantages of the invention will become apparent from the description of a preferred but not exclusive embodiment thereof, illustrated only by way of non-limitative example in the accompanying drawings, wherein:

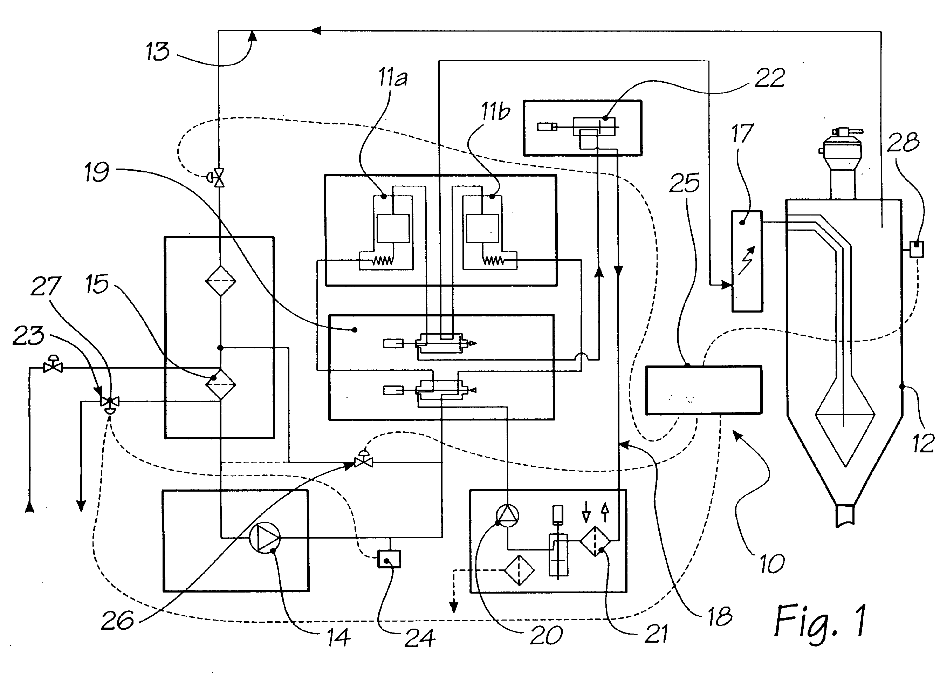

Figure 1 is a schematic view of a dehumidification system to which a device according to the invention is applied;

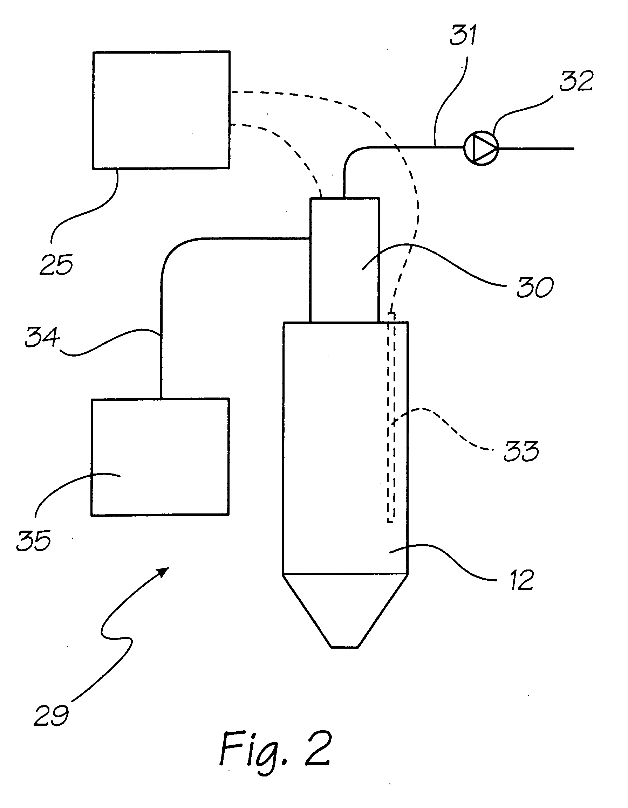

Figure 2 is a view of a detail of the dehumidification system of Figure 1.

With particular reference to the above described figures, a device for optimizing plastic granule dehumidification systems according to the invention is generally designated by the reference numeral 10.

The device 10 is associated with a dehumidification system, which comprises two towers 11a and 11b that contain molecular sieves, a hopper 12 for plastic granules, ducts suitable to provide a first circuit 13 for connecting the towers 11a and 11b and the hopper 12, and a first blower 14 suitable to circulate hot air within the first circuit 13, upstream of which a filter 15 and an air cooling unit 16 are arranged.

Upstream of the hopper 12 there is a heater 17 for heating the air that enters said hopper 12.

The dehumidification system furthermore comprises a second circuit 18, which allows to regenerate the molecular sieves contained within the towers 11a and 11b.

In practice, the first circuit 13 and the second circuit 18 are connected by means of distribution valves, generally designated by the reference numeral 19, which allow to make one tower 11a/11b work while the other tower 11b/11a is being subjected to the regeneration process.

The second circuit 18 comprises a second blower 20, which during the first step of the regeneration of the sieves, i.e., the heating step, circulates ambient air, which is heated by means of a heat exchanger 21 and is passed through the sieves to be regenerated.

The air that exits from one tower 11a/11b is then expelled into the environment through a slide-type venting valve 22.

During the second regeneration step, i.e., the cooling step, the second blower 20 circulates air, which after being cooled, again by means of the heat exchanger 21, is passed through the sieves to be regenerated.

The step ends when the sieve reaches a temperature that is compatible with the dehumidification working process.

The cooling unit 16 can be, for example, a heat exchanger, designated by the same reference numeral, in which the cooling fluid is water.

The device 10 comprises regulator means, in particular a regulator for regulating the flow-rate of the cooling fluid of the cooling unit 16, generally designated by the reference numeral 23, which is based on a first temperature probe 24 arranged along the path of the air ahead of the molecular sieves 11a and 11b.

The regulator 23 is constituted by valve means, in this case, by a modulating valve 27, which is connected to the first temperature probe 24, and by a control unit, generally designated by the reference numeral 25.

The modulating valve 27 can be replaced with an actuation valve of the on/off type, which is connected to the first temperature probe 24 and to the control unit 25, or by a thermostatic valve connected to the probe 24.

The device 10 furthermore comprises as regulator means an air flow-rate regulator, generally designated by the reference numeral 26, for the air sent into the hopper 12, said regulator being suitable to bypass the air moved by the blower 14 between the inlet and the outlet of said blower 14.

The air flow-rate regulator 26 can be for example a modulating valve, designated by the same reference numeral, which is actuated by the control unit 25, or can be replaced with a series of valves of the on/off type.

As an alternative, the air flow-rate regulator can be constituted by an inverter that is suitable to modulate the speed of the blower 14 and therefore accordingly modulate the air flow-rate generated thereby.

The device 10 can comprise a loader, generally designated by the reference numeral 29, for loading plastic granules into the hopper 12.

The loader 29 is constituted by a container 30, which is arranged above the hopper 12 to be loaded, is suitable to receive the plastic granules, and is connected by means of a first pipe 31 to a third blower 32, and by an indicator 33 for indicating the level of the plastic granules, said blower and said indicator being both managed by the control unit 25.

When the level indicator 33 indicates the absence of the material, the control unit 25 starts the third blower 32.

The third blower 32 produces a negative pressure, which when transmitted to the container 30 draws the material through a second pipe 34, which is connected to a tank 35 that contains the plastic granules to be loaded.

The third blower 32 remains active for a time that can be set so that it is sufficient to fill the container 30.

The level indicator 33 can of the on/off type, capable of indicating the presence or absence of the material, or of the analog type, capable of indicating the quantity of material that is present.

In this manner it is possible to bring the level of the granules present in the hopper 12 to a value that is minimal in order to ensure the dehumidification times planned for the material being used.

The loader 29 ensures the correct level by using a production value set on the control unit 25 and provided by the processing machine with which the device 10 is associated.

Advantageously, the air flow-rate regulator 26 can be based on the exit temperature of the air from the hopper 12 or on the temperature of the plastic granule, measured by a second temperature probe 28.

This temperature value, by virtue of the processing of an algorithm managed by the control unit 25, determines the signal that is suitable to control said air flow-rate regulator 26.

In practice it has been found that the intended aim and objects of the present invention have been achieved.

A device has in fact been provided which has a simple structure and a low cost and is capable of optimizing the dehumidification process in systems for dehumidifying plastic granules.

The regulation of the temperature of the process fluid (air) by regulating the cooling fluid allows to optimize the dehumidification process both in terms of stability of the dehumidification and in terms of energy consumption, while flow-rate regulation allows to optimize the dehumidification process both in terms of quality and in terms of energy consumption.

Furthermore, the adjustment of the quantity of material in the hopper allows to optimize the dehumidification process both in terms of dehumidification quality and in terms of energy consumption.

The present invention is susceptible of numerous modifications and variations, all of which are within the scope of the appended claims.

The technical details may be replaced with other technically equivalent elements.

The materials, so long as they are compatible with the contingent use, as well as the dimensions, may be any according to the requirements.

The disclosures in Italian Patent Application No. PD2001A000251 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for optimizing systems for dehumidifying plastic granules of the type, that comprises at least one tower (11a, 11b) for containing molecular sieves, at least one hopper (12) for plastic granules, ducts (13,18) for connecting said at least one tower (11a, 11b) and said hopper (12), at least one blower (14, 20) which circulates air in said ducts (13,18), filtering means (15) and at least one air cooling unit (16), which are arranged upstream of said at least one molecular sieve tower (11a, 11b), and means (21) for heating the air upstream of said hopper (12), said device being **characterized in that** it comprises regulator means constituted by a regulator (23) for regulating the flow-rate of the cooling fluid of said air cooling unit (16) and/or a regulator (26) for regulating the flow rate of air sent with said hopper (12).

2. The device according to claim 1, **characterized in that** said fluid flow-rate regulator (23) is connected to a first temperature probe (24) that is arranged along the path of the air upstream of said at least one molecular sieve containment tower (11a, 11b).

3. The device according to claim 2, **characterized in that** said flow-rate regulator (23) is constituted by valve means (27) that is connected to said first temperature probe (24).

4. The device according to claim 3, **characterized in that** said valve means is constituted by an actuation valve (27) that is connected to said first temperature probe (24) and to a control unit (25).

5. The device according to claim 6, **characterized in that** said actuation valve (27) is of the on/off type, or of the modulating type.

6. The device according to one or more of the preceding claims, **characterized in that** said air flow-rate regulator is constituted by a modulating valve (26) connected to a control unit (25) or by a series of on/off valves that are adapted to bypass the air moved by the blower (14) between the inlet and the outlet of said blower (14).

7. The device of one or more of claims 1 to 5, **characterized in that** said air flow-rate regulator (26) is constituted by an inverter for modulating the speed of the blower (14), said inverter being connected to a control unit (25).

8. The device according to one or more of claims 6 to 7, **characterized in that** said flow-rate regulator is connected to a unit (25) for controlling its operation as a function of the temperature of the air in output from the hopper (12) and/or of the temperature of the granules contained in the hopper (12), measured by a second temperature probe (28).

9. The device according to one or more of the preceding claims, **characterized in that** it comprises a loader (29) for loading granules into the hopper (12) and an indicator (33) for indicating the level of the granules that are present in the hopper (12), said loader (29) and said indicator (33) being adapted to define the level of the granules and being managed by said control unit (25).

10. The device according to claim 9, **characterized in that** said loader (29) comprises a container (30) that is arranged above said hopper (12) and is suitable to receive the plastic granules, said container (30) being connected to a third blower (32) by way of a first pipe (31), and an indicator (33) for indicating the level of plastic granules, said container (30) and said indicator (33) being connected to said control unit (25), said container (30) being connected, by way of a second pipe (34), to a tank (35) that connects the plastic granules to be loaded.

11. The device according to claim 10, **characterized in that** said level indicator (33) is of the on/off type or the analog type.
